# DEMANDE DE BREVET EUROPEEN

(11) **EP 2 506 119 A1**
(43) Date de publication de la demande: **03.10.2012**
(21) Numéro de dépôt: 12161143.8
(22) Date de dépôt: 23.03.2012
(51) Int. Cl.: G06F 3/01

(54) **Commande d'affichage d'une pluralité d'écrans d'un dispositif de restitution multimédia**

(30) Priorité: 29.03.2011 FR 1152580
(71) Demandeur: France Telecom, 75015 Paris (FR)
(72) Inventeur: Gastinger, René, 35000 RENNES (FR)
(74) Mandataire: Cabinet Plasseraud

(57) **Abrégé**

L'invention concerne une commande d'affichage sur plusieurs écrans d'affichage d'un même dispositif comportant une forme polyédrique à P faces et N écrans, avec N inférieur ou égal à P, chaque écran étant disposé sur l'une des P faces, avec une assignation d'au moins des première et deuxième consignes d'affichage sur des premier et deuxième écrans. Ici, la première consigne est assignée à l'un des premier et deuxième écrans, tandis que la deuxième consigne est assignée à l'autre des premier et deuxième écrans, en fonction d'une détection d'environnement des premier et deuxième écrans, comme par exemple la détection d'un visage d'un utilisateur à proximité de l'un des écrans. On prévoit en particulier :
- une prise de vue (S2) d'un espace en regard des premier et deuxième écrans,
- une reconnaissance dans cette prise de vue d'un environnement (S3) des premier et deuxième écrans, et
- l'assignation (S7) de l'une des première et deuxième consignes à l'un des premier et deuxième écrans et de l'autre des première et deuxième consignes à l'autre des premier et deuxième écrans, en fonction de l'environnement reconnu sur la prise de vue.

## Description

La présente invention concerne une commande d'affichage sur au moins deux écrans d'un même dispositif.

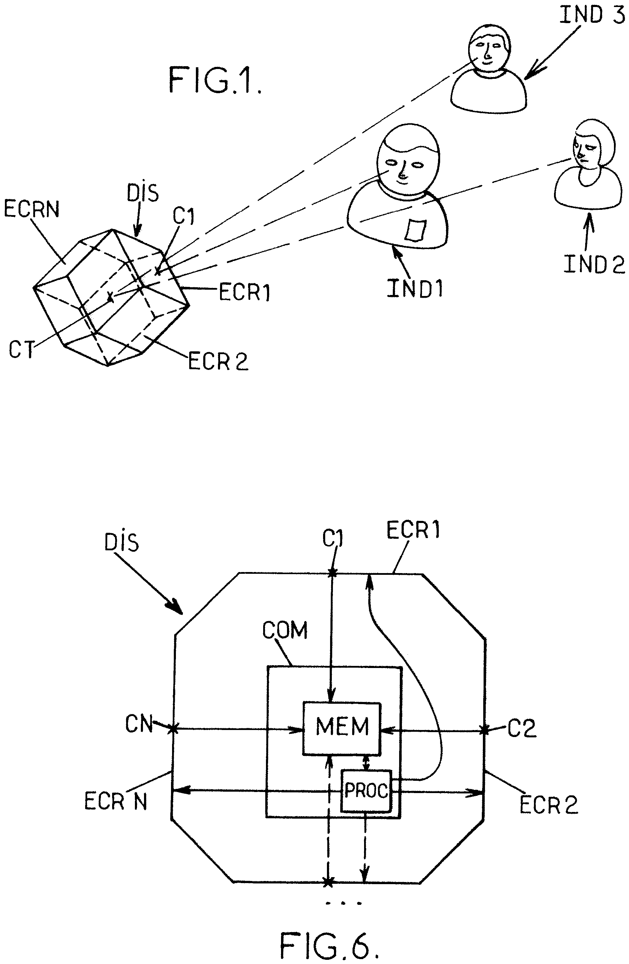

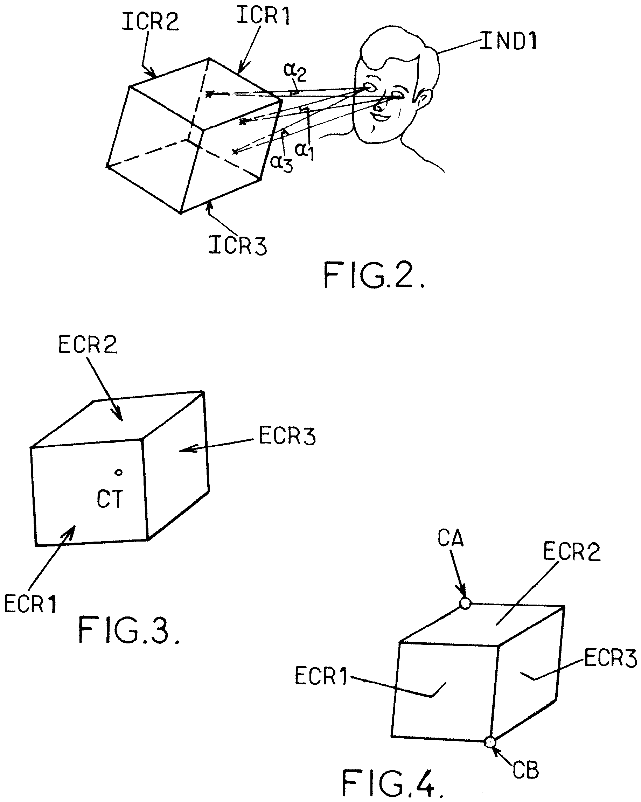

A titre d'exemple aucunement limitatif, un tel dispositif peut se présenter sous la forme d'un polyèdre (figure 1) donc chaque face comporte un écran tactile. On a représenté sur la figure 1 un polyèdre à plus de six faces, mais un exemple de réalisation d'un tel dispositif polyédrique peut être un cube comme représenté sur la figure 3. Par ailleurs, toutes les faces du polyèdre ne comportent pas nécessairement un écran. On peut prévoir par exemple dans un dispositif cubique que deux faces opposées du cube sont réservées à des haut-parleurs pour une restitution audio et/ou à des boutons de commande, ou autre. Par ailleurs, les écrans ne sont pas nécessairement tous tactiles, et certains ou tous peuvent ne servir qu'à l'affichage.

Un tel dispositif peut servir à la restitution de contenus multimédias (vidéo et éventuellement vidéo et audio), par exemple sous forme de données au format MPEG-2, MPEG-4, ou autres. La restitution peut s'effectuer dans le cadre d'une lecture vidéo (« video player ») ou en mode de diffusion (vidéo « streaming ») notamment pour des données télévisuelles (en « TV Interactive » par exemple), ou encore dans le cadre de services de type Internet (interaction avec des serveurs applicatifs, consultation de bases de données distantes, notamment dans le cadre de réseaux au protocole IP, 3G, wifi, ou autres).

Un tel dispositif peut afficher par exemple un contenu principal sur l'écran d'une face et un contenu auxiliaire sur l'écran d'une autre face (par exemple des informations supplémentaires sur le contenu principal). Compte tenu de la symétrie d'un tel dispositif, il peut être difficile pour un utilisateur de repérer immédiatement la face dont l'écran restitue le contenu principal.

La présente invention vient améliorer la situation.

Elle propose à cet effet un procédé de commande d'affichage sur au moins un premier et un deuxième écran d'affichage d'un même dispositif comportant une forme polyédrique à P faces et N écrans, avec N inférieur ou égal à P, chaque écran étant disposé sur l'une des P faces, le procédé comprenant une assignation d'au moins des première et deuxième consignes d'affichage sur les premier et deuxième écrans.

Dans le procédé au sens de l'invention, la première consigne est assignée à l'un des premier et deuxième écrans, tandis que la deuxième consigne est assignée à l'autre des premier et deuxième écrans, en fonction d'une détection d'environnement desdits premier et deuxième écrans, et en particulier le procédé comporte les étapes :
a) obtenir au moins une prise de vue d'un espace en regard desdits premier et deuxième écrans,
b) reconnaitre dans ladite prise de vue un environnement desdits premier et deuxième écrans, et
c) assigner l'une des première et deuxième consignes à l'un des premier et deuxième écrans et l'autre des première et deuxième consignes à l'autre des premier et deuxième écrans, en fonction de l'environnement reconnu sur ladite prise de vue.

Ainsi, la mise en oeuvre du procédé permet d'afficher les données sur l'écran positionné devant l'utilisateur en lui permettant de voir immédiatement les données les plus pertinentes qu'il peut rechercher et en évitant des manipulations en tous sens du dispositif pour découvrir la face dont l'écran affiche ces données.

Par exemple, le dispositif peut reposer sur un support. Par exemple encore, plusieurs capteurs de prises de vue respectives sont prévus dans le dispositif et l'une des prises de vue peut révéler un degré de luminosité inférieur aux autres, ce qui signifie que le capteur ayant effectué cette prise de vue de faible degré de luminosité détecte un environnement correspondant à un contact direct avec le support sur lequel repose le dispositif. Ainsi, le contenu principal peut être affiché par exemple sur l'écran d'une face opposée à ce capteur.

Néanmoins, l'utilisateur peut tenir le dispositif dans ses mains, dans une réalisation où le dispositif est portatif, et, dans une telle réalisation notamment, il est avantageux de déterminer la position du visage de l'utilisateur par rapport aux écrans du dispositif. A cet effet, la reconnaissance d'environnement précitée comporte :
- une recherche de texture de visage dans la prise de vue, et
- en cas de reconnaissance d'une texture de visage, une estimation de positions respectives du visage par rapport aux premier et deuxième écrans,
l'assignation des première et deuxième consignes étant fonction desdites positions estimées.

Les termes « reconnaissance d'une texture de visage » sont à interpréter au sens large et englobent notamment la reconnaissance d'une forme correspondant à un visage, sans viser nécessairement la reconnaissance du visage lui-même (permettant d'identifier un individu).

Les positions estimées permettent en particulier de déterminer l'écran qui est le plus en face du visage dont la texture est reconnue. Ainsi, dans le cas par exemple où la première consigne vise l'affichage d'informations principales et la deuxième consigne vise l'affichage d'informations auxiliaires (ou simplement aucun affichage), la première consigne est assignée à l'écran qui est le plus en face du visage, d'après les positions estimées précitées.

Cette première consigne, d'affichage d'informations principales, peut viser par exemple l'affichage d'une page d'accueil suite à une mise en service du dispositif (par exemple une mise sous tension ou après un état de veille). Dans ce cas, le procédé ci-avant peut avantageusement être exécuté suite à cette mise en service.

On peut prévoir par exemple que les premier et deuxième écrans soient juxtaposés (dans un même plan ou formant un angle entre eux). Une prise de vue générale de l'environnement autour des deux écrans permet alors de détecter un visage situé plus à proximité de l'un des écrans, ce qui permet d'assigner la première consigne précitée à cet écran. Une telle réalisation simple permet déjà d'assigner la consigne d'affichage des informations principales à l'écran qui est le plus en regard de l'utilisateur.

Dans une variante de réalisation, l'estimation des positions comporte :
- une identification dans la texture de visage de deux éléments symétriques du visage (par exemple les yeux ou les sourcils, ou autres, identifiés dans la texture de visage),
- pour chaque écran, une estimation d'un écart angulaire entre ces deux éléments symétriques, mesuré depuis le centre de l'écran, et
- un classement par ordre des écarts angulaires estimés,
l'écran qui est le plus en face du visage étant identifié par le plus grand écart angulaire estimé.

Avantageusement, notamment dans le cas où le dispositif comporte plusieurs faces à écran formant un angle entre elles (même un angle faible comme dans le cas du polyèdre illustré sur la figure 1), une mesure de cet angle par rapport à chaque centre de face permet de déterminer exactement la face la plus en regard de l'utilisateur.

Plusieurs visages peuvent apparaître dans une même prise de vue dans le cas où plusieurs personnes sont autour du dispositif (dans un cadre familial par exemple), mais un utilisateur en particulier manipule le dispositif. Le procédé prévoit de détecter cet utilisateur en présumant, dans un exemple de réalisation, qu'il s'agit de la personne située la plus près du dispositif.

Ainsi, dans une telle réalisation, en cas de reconnaissance d'une pluralité de textures de visage dans la prise de vue, l'estimation de positions comporte :
- une détermination de la texture de visage correspondant au visage le plus proche en distance du dispositif, et
- une estimation de positions respectives dudit visage le plus proche du dispositif, par rapport aux premier et deuxième écrans.

Dans une réalisation, cette distance entre un visage et le dispositif est déterminée plus précisément par une évaluation d'une distance entre le visage et un barycentre de faces coïncidant chacune avec un écran du dispositif. A cet effet, on peut par exemple déterminer la texture de visage présentant la plus grande surface sur la prise de vue.

Néanmoins, on ne retient pas le ou les visages dont la détection des deux éléments symétriques (tels les yeux, les sourcils ou encore les oreilles) a échoué. Ainsi, dans une telle réalisation, la texture de visage retenue pour l'estimation des positions respectives précitées correspond au visage le plus proche en distance du dispositif et pour lequel les deux éléments symétriques sont repérés sur la prise de vue.

Ainsi, le procédé selon une telle réalisation peut comporter les étapes ci-après, suite à une reconnaissance de textures de visage sur au moins une prise de vue :
- une mesure de distance entre chaque visage et le dispositif,
- une classification des visages dont les textures sont identifiées par ordre de distance croissante, et une sélection du visage le plus proche du dispositif,
- une recherche des deux yeux dans le visage le plus proche, en tant qu'éléments symétriques,
- en cas d'échec dans la détection des deux yeux, une sélection du deuxième visage le plus proche du dispositif avec une nouvelle recherche des deux yeux dans le deuxième visage, et une réitération de la présente étape jusqu'à détermination du visage pour lequel les deux yeux sont repérés sur la prise de vue,
- pour chaque écran, une estimation d'angle que forment entre elles deux droites issues du centre de l'écran et passant respectivement par les deux yeux,
- une classification des écrans par ordre croissant des angles estimés, et
- l'assignation de la première consigne à l'écran pour lequel l'angle estimé est le plus grand.

Bien entendu, plusieurs vues peuvent être prises par différents capteurs répartis à des positions distinctes sur le dispositif et les positions respectives d'un ou plusieurs visages par rapport aux écrans du dispositif peuvent être déterminées par recoupements d'une prise de vue à l'autre.

On peut prévoir néanmoins un seul capteur de prise de vue au centre du dispositif (par exemple une caméra grand-angle de 360° qui acquiert une image par transparence des faces du dispositif), notamment dans le cas d'un dispositif comportant une forme polyédrique avec un écran par exemple tactile (transparent) sur chaque face du polyèdre.

Dans une variante, on peut prévoir un capteur de prise de vue sur une arête à l'intersection de deux faces du polyèdre, ou encore à certains sommets du polyèdre (comme décrit plus loin en référence à la figure 4 dans un exemple d'une forme cubique de polyèdre). Ainsi, en termes plus génériques, dans le cas où deux faces du dispositif qui portent les premier et deuxième écrans forment un angle entre elles, un capteur de prise de vue peut être disposé sur une arête à l'intersection des deux faces.

La présente invention vise aussi le dispositif d'affichage lui-même, comprenant un premier et un deuxième écran parmi N écrans, le dispositif comportant une forme polyédrique à P faces et N écrans, avec N inférieur ou égal à P, chaque écran étant disposé sur l'une des P faces. Le dispositif comprend en outre un module de commande d'affichage pour assigner au moins des première et deuxième consignes d'affichage sur les premier et deuxième écrans. Le dispositif comporte en outre au moins un capteur de prise de vue relié au module de commande pour obtenir au moins une prise de vue d'un espace en regard des premier et deuxième écrans. Le module de commande comporte des moyens de reconnaissance, dans la prise de vue, d'un environnement des premier et deuxième écrans, et des moyens pour assigner l'une des première et deuxième consignes à l'un des premier et deuxième écrans et l'autre des première et deuxième consignes à l'autre des premier et deuxième écrans, en fonction de l'environnement reconnu sur la prise de vue.

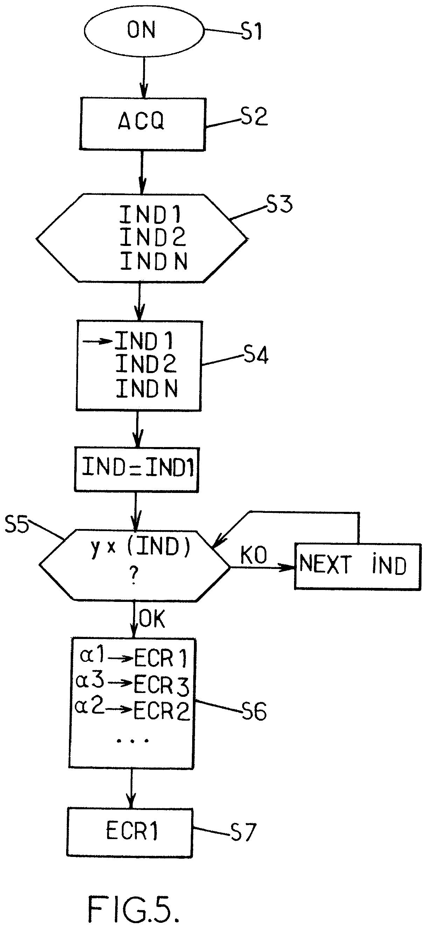

La présente invention vise aussi un programme informatique comportant des instructions pour la mise en oeuvre du procédé ci-avant, lorsque ce programme est exécuté par un processeur. Par exemple, le module de commande du dispositif précité peut exécuter ce programme informatique. Un exemple d'algorithme général d'un tel programme sera décrit ci-après en référence à la figure 5 illustrant un organigramme possible.

D'ailleurs, d'autres caractéristiques et avantages de l'invention apparaîtront à l'examen de la description détaillée ci-après, et des dessins annexés sur lesquels :
- la figure 1 présente un exemple de forme de réalisation du dispositif au sens de l'invention et illustre schématiquement la détection d'un visage le plus proche du dispositif,
- la figure 2 illustre schématiquement la détermination d'une face du dispositif la plus en face du visage détecté,
- la figure 3 illustre schématiquement la disposition d'un capteur de prise de vue au centre du dispositif dans une première réalisation,
- la figure 4 illustre schématiquement la disposition des capteurs de prises de vue à des sommets opposés du dispositif dans une deuxième réalisation,
- la figure 5 illustre une succession d'étapes du procédé dans une réalisation de l'invention, et
- la figure 6 illustre schématiquement les éléments d'un dispositif de l'invention.

En référence à la figure 1, un dispositif de restitution multimédia au sens de l'invention DIS comporte une pluralité d'écrans ECR1, ECR2, ..., ECRN, sur chacune de ses faces dans l'exemple représenté. Au moins l'un de ces écrans ECR1 est susceptible d'être visualisé par une ou plusieurs personnes IND1, IND2, IND3, et en particulier par un utilisateur IND1 manipulant le dispositif DIS.

En référence à la figure 6 illustrant schématiquement un tel dispositif DIS, dans l'exemple représenté, un ou plusieurs capteurs C1, ..., CN (tel un objectif de caméra ou d'appareil photographique) permettent d'acquérir des prises de vue selon différentes directions. Ces prises de vue sont transmises sous forme de pixels numériques dans une mémoire de travail MEM d'un module COM de commande d'affichage sur les écrans du dispositif. Ce module COM comporte également un processeur PROC pour effectuer une reconnaissance de texture de visage dans les prises de vue, en déduire la présence d'un utilisateur face à l'un des écrans particuliers du dispositif et commander l'affichage sur les écrans du dispositif comme décrit plus loin.

Bien entendu, les capteurs de prises de vue C1, C2, C3 peuvent être situés chacun sur une face du dispositif (par exemple au centre d'une face), comme représenté sur la figure 6 à titre illustratif. En pratique, on cherche à limiter le nombre de capteurs et on peut prévoir avantageusement un seul capteur CT situé au centre du dispositif, comme illustré sur la figure 3 représentant un dispositif de forme générale cubique. Par exemple, le capteur CT peut correspondre à une caméra grand-angle (à 360°) placée au centre du cube et utilisant la transparence des faces du dispositif pour acquérir les images de l'extérieur environnant le dispositif. Ce dernier comporte alors, dans cet exemple, six écrans tactiles transparents occupant les six faces du dispositif. Dans une variante (par exemple dans le cas d'écrans tactiles peu transparents), deux capteurs de prises de vue CA et CB (par exemple des caméras grand-angle de 270°) peuvent être situés en deux sommets opposés de la forme cubique du dispositif, comme illustré sur la figure 4. A titre illustratif, le dispositif peut présenter une telle forme de cube d'environ 10 centimètres de côté et de tels capteurs permettent d'explorer la périphérie 3D du dispositif, selon le procédé décrit ci-après.

Dans une première étape de ce procédé, le module COM de commande d'affichage sur les écrans du dispositif détecte, parmi les textures de visage apparaissant sur au moins une prise de vue acquise par exemple par le capteur C1 de la figure 1, le visage (de l'individu IND1) le plus proche du centre CT du dispositif et dont les deux yeux (ou encore les deux sourcils) sont visibles. En référence à la figure 2, l'étape suivante consiste, pour le module COM, à mesurer, pour chaque face du dispositif ECR1, ECR2, ECR3, l'angle α1, α2, α3, que forment entre elles deux droites issues du centre de la face et passant respectivement par les deux yeux du visage le plus proche du dispositif.

On classe ensuite les faces ECR2, ECR3, ECR1 (dans l'exemple représenté sur la figure 2) par ordre croissant de valeurs d'angle α2, α3, et α1, pour sélectionner ainsi la face ECR1 à laquelle correspond la valeur d'angle α1 la plus grande. Ainsi, la face ECR1 (dans l'exemple représenté) correspond à celle qui est la plus en regard de l'utilisateur IND1. La face ECR1 est donc déterminée pour afficher les informations principales précitées, comme par exemple des informations initiales (page d'accueil ou autre) lors de la mise en service du dispositif.

On décrit plus en détails ci-après une forme de réalisation du procédé en référence à la figure 5. Après mise en service du dispositif (étape S1 de la figure 5), par exemple par appui long de l'utilisateur sur un bouton de mise en service (disposé par exemple en un coin du dispositif), au moins une prise de vue est acquise (étape S2). L'étape S3 suivante consiste à détecter des textures de visages dans la prise de vue (par exemple par reconnaissance de forme). L'étape S4 suivante consiste à :
- mesurer la distance (par télémétrie) de chaque texture de visage détectée par rapport au centre du dispositif CT pour sélectionner le visage IND1 le plus proche du dispositif, et
- classer les visages par ordre de distance croissante depuis le centre du dispositif.

L'étape suivante S5 consiste à repérer les yeux sur le visage IND1 sélectionné et à vérifier en particulier si les deux yeux apparaissent sur la prise de vue pour ce visage. Si tel n'est pas le cas, il est sélectionné le deuxième visage le plus proche (IND3 dans l'exemple représenté) et la présence des deux yeux est vérifiée à nouveau selon un processus itératif jusqu'à trouver un visage présentant deux yeux.

L'étape suivante S6 consiste :
- à mesurer, pour chaque face i, l'angle αi que forment deux droites issues du centre de cette face i et passant par chacun des deux yeux et
- à classer les faces par ordre décroissant de la valeur d'angle mesurée.

A l'étape S7, la consigne d'affichage d'une page d'accueil après mise en service du dispositif est assignée à la face associée à la valeur d'angle la plus grande (donc, la face la plus en regard du visage retenu à l'étape S5). Des informations auxiliaires peuvent être affichées sur des faces adjacentes à la face retenue à l'étape S7. Ensuite, des informations suivantes peuvent être affichées en fonction des actions de l'utilisateur et de la navigation définie par une application lancée sur le dispositif.

Les étapes S4 à S7 sont mises en oeuvre par le module COM de commande d'affichage. Celui-ci comporte donc des moyens pour mettre en oeuvre ces étapes.

Bien entendu, la présente invention ne se limite pas à la forme de réalisation décrite ci-avant à titre d'exemple ; elle s'étend à d'autres variantes.

Ainsi, il a été décrit ci-avant l'exécution du procédé suite à la mise en service du dispositif avec une page d'accueil s'affichant sur l'écran en regard de l'utilisateur. Néanmoins, d'autres variantes sont possibles. Par exemple, il peut être prévu que l'écran en regard de l'utilisateur affiche la dernière page d'écran qui était en regard de l'utilisateur lors de la précédente mise en service. Dans une telle réalisation, il peut être avantageux d'exécuter répétitivement le procédé de détection d'écran en regard de l'utilisateur pour déterminer à tout moment cet écran.

Par ailleurs, la présente invention n'est pas limitée au nombre de faces ou de capteurs (ni encore au nombre d'écrans) que peut comporter le dispositif.

## Revendications

1. Procédé de commande d'affichage sur au moins un premier et un deuxième écran d'affichage d'un même dispositif comportant une forme polyédrique à P faces et N écrans, avec N inférieur ou égal à P, chaque écran étant disposé sur l'une des P faces,
le procédé comprenant une assignation d'au moins des première et deuxième consignes d'affichage sur les premier et deuxième écrans,
**caractérisé en ce que** la première consigne est assignée à l'un des premier et deuxième écrans, tandis que la deuxième consigne est assignée à l'autre des premier et deuxième écrans, en fonction d'une détection d'environnement desdits premier et deuxième écrans,
et **en ce que** le procédé comporte les étapes :
a) obtenir au moins une prise de vue (S2) d'un espace en regard desdits premier et deuxième écrans,
b) reconnaitre dans ladite prise de vue un environnement (S3) desdits premier et deuxième écrans, et
c) assigner (S7) l'une des première et deuxième consignes à l'un des premier et deuxième écrans et l'autre des première et deuxième consignes à l'autre des premier et deuxième écrans, en fonction de l'environnement reconnu sur ladite prise de vue.

2. Procédé selon la revendication 1, **caractérisé en ce que** ladite reconnaissance d'environnement comporte :
- une recherche de texture de visage dans la prise de vue (S3), et
- en cas de reconnaissance d'une texture de visage, une estimation de positions respectives (S6) du visage par rapport aux premier et deuxième écrans,
l'assignation des première et deuxième consignes étant fonction desdites positions estimées.

3. Procédé selon la revendication 2, dans lequel la première consigne vise l'affichage d'informations principales et la deuxième consigne vise l'affichage d'informations auxiliaires ou aucun affichage, **caractérisé en ce que** la première consigne est assignée à l'écran qui est le plus en face du visage (S7), d'après lesdites positions estimées.

4. Procédé selon la revendication 3, **caractérisé en ce que** la première consigne vise l'affichage d'une page d'accueil suite à une mise en service du dispositif (S1), et **en ce que** le procédé est exécuté suite à ladite mise en service.

5. Procédé selon l'une des revendications 2 à 4, **caractérisé en ce que** l'estimation des positions comporte :
- une identification dans la texture de visage de deux éléments symétriques du visage (S5),
- pour chaque écran, une estimation d'un écart angulaire entre les deux éléments (S6), mesuré depuis le centre de l'écran, et
- un classement par ordre des écarts angulaires estimés,
l'écran qui est le plus en face du visage étant identifié par le plus grand écart angulaire estimé.

6. Procédé selon l'une des revendications 2 à 5, **caractérisé en ce que**, en cas de reconnaissance d'une pluralité de textures de visage dans ladite prise de vue, ladite estimation de positions comporte :
- une détermination (S4) de la texture de visage correspondant au visage le plus proche en distance du dispositif, et
- une estimation de positions respectives dudit visage le plus proche du dispositif, par rapport aux premier et deuxième écrans.

7. Procédé selon la revendication 6, **caractérisé en ce que** la distance entre un visage et le dispositif est déterminée par une évaluation d'une distance entre le visage et un barycentre (CT) de faces coïncidant chacune avec un écran du dispositif.

8. Procédé selon l'une des revendications 6 et 7, prise en combinaison avec la revendication 5, **caractérisé en ce que** la texture de visage retenue pour l'estimation desdites positions respectives correspond au visage le plus proche en distance du dispositif et pour lequel lesdits deux éléments symétriques sont repérés sur la prise de vue (S5).

9. Procédé selon la revendication 8, prise en combinaison avec la revendication 3, **caractérisé en ce qu**'il comporte, suite à une reconnaissance de textures de visage sur au moins une prise de vue :
- une mesure de distance entre chaque visage et le dispositif (S4),
- une classification des visages dont les textures sont identifiées par ordre de distance croissante, et une sélection du visage le plus proche du dispositif,
- une recherche des deux yeux dans le visage le plus proche, en tant qu'éléments symétriques (S5),
- en cas d'échec dans la détection des deux yeux, une sélection du deuxième visage le plus proche du dispositif avec une nouvelle recherche des deux yeux dans le deuxième visage, et une réitération de la présente étape jusqu'à détermination du visage pour lequel les deux yeux sont repérés sur la prise de vue,
- pour chaque écran, une estimation d'angle (S6) que forment entre elles deux droites issues du centre de l'écran et passant respectivement par les deux yeux,
- une classification des écrans par ordre d'angles estimés, et
- l'assignation de la première consigne à l'écran pour lequel l'angle estimé est le plus grand (S7).

10. Procédé selon l'une des revendications précédentes, **caractérisé en ce qu'**un capteur de prise de vue (CT) est prévu au centre du dispositif.

11. Procédé selon l'une des revendications 1 à 9, **caractérisé en ce que** les premier et deuxième écrans sont dans des faces du dispositif formant un angle entre elles, et **en ce qu'**un capteur de prise de vue (CA ; CB) est prévu sur une arête à l'intersection des deux faces.

12. Dispositif d'affichage comprenant un premier et un deuxième écran parmi N écrans, le dispositif comportant une forme polyédrique à P faces et N écrans, avec N inférieur ou égal à P, chaque écran étant disposé sur l'une des P faces,
le dispositif comprenant en outre, un module de commande (COM) d'affichage pour assigner au moins des première et deuxième consignes d'affichage sur les premier et deuxième écrans, **caractérisé en ce que** le dispositif comporte en outre au moins un capteur de prise de vue (C1, ..., CN) relié au module de commande pour obtenir au moins une prise de vue d'un espace en regard desdits premier et deuxième écrans,
et **en ce que** le module de commande comporte des moyens de reconnaissance, dans ladite prise de vue, d'un environnement desdits premier et deuxième écrans, et des moyens pour assigner l'une des première et deuxième consignes à l'un des premier et deuxième écrans et l'autre des première et deuxième consignes à l'autre des premier et deuxième écrans, en fonction de l'environnement reconnu sur ladite prise de vue.

13. Programme informatique comportant des instructions pour la mise en oeuvre du procédé selon l'une des revendications 1 à 11, lorsque ce programme est exécuté par un processeur (PROC).
